(19) Europäisches Patentamt / European Patent Office / Office européen des brevets

(11) **EP 2 952 600 B1**

(12) **EUROPEAN PATENT SPECIFICATION**

(45) Date of publication and mention
of the grant of the patent:
**20.06.2018 Bulletin 2018/25**

(21) Application number: **14745697.4**

(22) Date of filing: **23.01.2014**

(51) Int Cl.:
*C22C 38/00* (2006.01)     *C21D 9/46* (2006.01)
*C22C 38/14* (2006.01)     *C22C 38/54* (2006.01)
*C23C 2/02* (2006.01)      *C23C 2/06* (2006.01)
*C23C 2/28* (2006.01)      *C21D 8/02* (2006.01)
*C23C 2/40* (2006.01)      *C22C 38/02* (2006.01)
*C22C 38/04* (2006.01)     *C22C 38/06* (2006.01)
*C22C 38/08* (2006.01)     *C22C 38/16* (2006.01)
*C22C 38/24* (2006.01)     *C22C 38/28* (2006.01)
*C22C 38/12* (2006.01)

(86) International application number:
**PCT/JP2014/000337**

(87) International publication number:
**WO 2014/119261 (07.08.2014 Gazette 2014/32)**

(54) **HIGH-STRENGTH HOT-ROLLED STEEL SHEET AND PRODUCTION METHOD THEREOF**

HOCHFESTES HEISSGEWALZTES STAHLBLECH UND HERSTELLUNGSVERFAHREN DAFÜR

TÔLE D'ACIER À HAUTE RÉSISTANCE LAMINÉE À CHAUD ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2013 JP 2013016457**

(43) Date of publication of application:
**09.12.2015 Bulletin 2015/50**

(73) Proprietor: **JFE Steel Corporation
Tokyo 100-0011 (JP)**

(72) Inventors:
• **NAKAJIMA, Katsumi
Tokyo 100-0011 (JP)**
• **YAMAZAKI, Kazuhiko
Tokyo 100-0011 (JP)**
• **KAMI, Chikara
Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 2 759 613     WO-A1-2011/122031
JP-A- 2007 063 668     JP-A- 2007 247 046
JP-A- 2012 251 200     JP-A- 2013 019 048**

## Description

The present invention relates to a high-strength hot-rolled steel sheet having high burring formability and a method for manufacturing the high-strength hot-rolled steel sheet. A high-strength hot-rolled steel sheet according to the present invention is mainly used in automotive body components, for example, structural parts, such as members and frames of automotive bodies, and chassis parts, such as suspensions. However, the present invention is not limited to these applications.

Background Art

In recent years, for weight saving of automotive bodies, high-strength steel sheets have been actively used as materials for automotive parts. High-strength steel sheets are widely used as automotive structural parts. For further weight saving of automotive bodies, there is a strong demand for application of high-strength steel sheets not only to structural parts but also to chassis parts in which hot-rolled steel sheets are generally used.

Most of automotive parts made of steel sheets are formed into predetermined shapes by press forming or burring forming. However, in general, higher-strength steel sheets have lower workability. Thus, high-strength steel sheets for use in automotive parts must have high workability as well as desired strength. In particular, because chassis parts are formed by severe processing, both high strength and workability must be satisfied. In particular, applicability of high-strength steel sheets to these parts and mass productivity of these parts often depend on burring formability.

Various microstructure control and reinforcement methods have been used to improve the workability of high-strength hot-rolled steel sheets. For example, these methods include use of a complex structure of ductile ferrite and hard martensite, use of a bainite microstructure, and precipitation strengthening of a ferrite microstructure. However, high-strength hot-rolled steel sheets having sufficient workability that can be applied to parts to be subjected to severe burring forming, such as chassis parts, cannot be manufactured in the related art. Thus, there is a demand for high-strength hot-rolled steel sheet having high workability.

To address such a demand, Patent Literature 1 describes a hot-rolled steel sheet that has a composition including, on a mass percent basis, one or two of C: 0.01% or more and 0.20% or less, Si: 1.5% or less, Al: 1.5% or less, Mn: 0.5% or more and 3.5% or less, P: 0.2% or less, S: 0.0005% or more and 0.009% or less, N: 0.009% or less, Mg: 0.0006% or more and 0.01% or less, 0: 0.005% or less, and Ti: 0.01% or more and 0.20% or less, and Nb: 0.01% or more and 0.10% or less and has a structure consisting essentially of a bainite phase. In the technique proposed in Patent Literature 1, the steel sheet has a structure consisting essentially of a bainite phase, and Mg sulfide is used to decrease the size of (Ti, Nb)N. Thus, the high-strength hot-rolled steel sheet has a strength of more than 980 N/mm$^2$ and high hole expandability and ductility.

Patent Literature 2 describes a hot-rolled steel sheet that has a composition including, on a mass percent basis, C: 0.01% or more and 0.10% or less, Si: 2.0% or less, and Mn: 0.5% or more and 2.5% or less, as well as one or two or more of V: 0.01% or more and 0.30% or less, Nb: 0.01% or more and 0.30% or less, Ti: 0.01% or more and 0.30% or less, Mo: 0.01% or more and 0.30% or less, Zr: 0.01% or more and 0.30% or less, and W: 0.01% or more and 0.30% or less, V, Nb, Ti, Mo, Zr, and W being 0.5% or less in total, and has a microstructure in which the bainite fraction is 80% or more. In the technique proposed in Patent Literature 2, the steel sheet has a structure consisting essentially of bainite, and V, Ti, and/or Nb carbide causes precipitation strengthening of the bainite. Thus, the high-strength hot-rolled steel sheet has high stretch-flangeability and good fatigue characteristics.

Patent Literature 3 describes a high-strength hot-dip galvanized steel sheet that includes a hot-rolled steel sheet as a substrate. The hot-rolled steel sheet has a composition including, on a mass percent basis, C: 0.07% or more and 0.13% or less, Si: 0.3% or less, Mn: 0.5% or more and 2.0% or less, P: 0.025% or less, S: 0.005% or less, N: 0.0060% or less, Al: 0.06% or less, Ti: 0.10% or more and 0.14% or less, and V: 0.15% or more and 0.30% or less, and has a structure consisting essentially of a ferrite phase in which a desired volume percentage of fine carbide having an average grain size of less than 10 nm is dispersedly precipitated. The technique proposed in Patent Literature 3 can be used to manufacture a high-strength hot-dip galvanized steel sheet having a tensile strength of 980 MPa or more and high workability.

WO 2011/122031 A1 and EP2 759 613 A1 also disclose high strength hot rolled steel sheets.

Citation List - Patent Literatures

PTL 1: Japanese Unexamined Patent Application Publication No. 2005-120437
PTL 2: Japanese Unexamined Patent Application Publication No. 2009-84637
PTL 3: Japanese Unexamined Patent Application Publication No. 2011-225978

Summary of Invention

Technical Problem

However, in the techniques proposed in Patent Literatures 1 and 2, the hot-rolled steel sheets, which have a structure consisting essentially of a bainite phase, have low ductility. Thus, high-strength hot-rolled steel sheets having sufficient burring formability that can be applied to automotive parts cannot be obtained. The technique proposed in Patent Literature 1 is not a practical technique that can be applied to mass-produced parts, such as automotive parts, because of the use of expensive Mg.

In the technique proposed in Patent Literature 3, the steel sheet has a microstructure in which fine carbide is dispersed in a matrix consisting essentially of a ferrite phase. Thus, the technique proposed in Patent Literature 3 can be used to manufacture a high-strength steel sheet having relatively good burring formability. This high-strength steel sheet has high burring formability in a hole-expanding test performed by a method according to the Japan Iron and Steel Federation standard, as shown by an example.

However, burring formability required for mass production of automotive parts is not studied in the related art, including the technique proposed in Patent Literature 3.

Burring formability of steel sheets has been principally evaluated in a hole-expanding test by a method according to the Japan Iron and Steel Federation standard. However, it is difficult to say that the hole-expanding test accurately simulates a punching process and a hole-expanding process in mass production of automotive parts in actual production lines. Thus, there is a problem that steel sheets that are experimentally shown to have good burring formability according to the standard often suffer from processing defects in mass production of automotive parts.

In particular, evaluation of workability in a laboratory alone is insufficient for mass production of parts. It is necessary to ensure workability of materials also in consideration of variations in processing conditions in mass production. Such problems are not investigated in the related art. Thus, the resulting high-strength hot-rolled steel sheets do not necessarily have desired strength and workability required for mass production of automotive parts, particularly burring formability (hereinafter also referred to as mass production burring formability). For example, it is very difficult to manufacture high-strength hot-rolled steel sheets that satisfy severe mass production burring formability required by automobile manufacturers and parts manufacturers using the techniques proposed in Patent Literatures 1 to 3.

As described above, many studies have been made on hot-rolled steel sheets having high stretch-flangeability (burring formability). However, techniques utilizing a known bainite phase or techniques utilizing carbide in a structure consisting essentially of ferrite cannot realize good mass production burring formability.

It is an object of the present invention to advantageously solve the problems of the related art and provide a high-strength hot-rolled steel sheet having a tensile strength (TS) of 900 MPa or more and having high burring formability, particularly high mass production burring formability, and a method for manufacturing the high-strength hot-rolled steel sheet.

The "mass production burring formability" herein is evaluated as a burring ratio measured in a hole-expanding test using a 60-degree conical punch after punching with a 50-mmφ punch (clearance of stamping: 30%) and is different from burring formability evaluated as a λ value determined by a known hole-expanding test method, for example, a hole-expanding test method according to the Japan Iron and Steel Federation standard.

Solution to Problem

In order to solve the problems described above, the present inventors first studied a method for evaluating mass production burring formability. Burring formability has been evaluated as a λ value, for example, measured by a hole-expanding test method according to the Japan Iron and Steel Federation standard. In this case, the punch diameter is 10 mmφ. However, the present inventors found that burring formability in actual mass production settings for parts is not correlated with the λ value measured in laboratories according to the Japan Iron and Steel Federation standard. As a result of the studies, it was found that burring formability evaluated in a new hole-expanding test that includes hole-expanding using a 60-degree conical punch after punching with a 50-mmφ punch (clearance of stamping: 30%) is closely correlated with mass production punchability and mass production burring formability.

The present inventors then extensively studied various factors that contribute to high strength and workability, particularly mass production burring formability, of hot-rolled steel sheets by evaluating mass production burring formability in the new hole-expanding test.

More specifically, extensive studies have been made on means for improving mass production burring formability of a hot-rolled steel sheet based on a structure consisting essentially of a ductile ferrite phase while reinforcing the hot-rolled steel sheet, with consideration given to all the precipitates that can be precipitated in the hot-rolled steel sheet, such as nitrides, sulfides, carbides, and complex precipitates thereof (for example, carbonitride).

As a result, it was found that a hot-rolled steel sheet having a tensile strength of 900 MPa or more that satisfies severe mass production burring formability required in actual automotive part production lines can be manufactured by optimizing the total amount of V in the hot-rolled steel sheet and Ti (Ti*) that contributes to the formation of carbide and increasing the percentage of carbide having a grain size of less than 9 nm in carbide precipitated in the hot-rolled steel sheet. It was also found that mass production burring formability can be further improved by controlling the size of not only carbide but also all the precipitates that can be precipitated in a hot-rolled steel sheet (nitrides, sulfides, carbides, and complex precipitates thereof).

The present inventors also studied means for achieving a desired size of precipitates that are precipitated in a hot-rolled steel sheet (nitrides, sulfides, carbides, and complex precipitates thereof), that is, a size required to impart desired strength (tensile strength of 900 MPa or more) and good mass production burring formability to the hot-rolled steel sheet. As a result, it was found that it is necessary to properly control the Mn content and S, N, Ti, and V contents of a hot-rolled steel sheet and optimize the hot rolling conditions and the cooling and coiling conditions after hot rolling.

The present invention was completed on the basis of these findings and it is in accordance with the appended claims 1- 5.

Advantageous Effects of Invention

The present invention provides a high-strength hot-rolled steel sheet having a tensile strength of 900 MPa or more and high burring formability such that the high-strength hot-rolled steel sheet can be subjected to processing in mass production of automotive parts. Thus, in accordance with the present invention, a high-strength hot-rolled steel sheet can be applied to structural parts, such as members and frames of automotive bodies, and chassis parts, such as suspensions. The present invention contributes greatly to weight saving of these parts.

The present invention can provide a hot-rolled steel sheet having a tensile strength of 900 MPa or more and good mass production burring formability. Thus, the high-strength hot-rolled steel sheet can be applied not only to automotive parts but also to other applications. Thus, the present invention has industrially advantageous effects. Description of Embodiments

The present invention will be further described below.

A high-strength hot-rolled steel sheet according to the present invention possesses a composition according to claim 1.

First, the reasons for limiting the composition of a hot-rolled steel sheet according to the present invention will be described below. Unless otherwise specified, the percentages of the components are on a mass percent basis.

C: 0.06% or more and 0.13% or less

C is an important element that forms an appropriate carbide in a hot-rolled steel sheet and secures the strength of the steel sheet. In order to achieve the desired tensile strength (900 MPa or more), the C content is 0.06% or more. However, a C content of more than 0.13% results in poor workability and undesired burring formability of a hot-rolled steel sheet. Thus, the C content is 0.06% or more and 0.13% or less, preferably 0.07% or more and 0.12% or less.

Si: Less than 0.5%

A Si content of 0.5% or more results in very low surface quality of a hot-rolled steel sheet, which adversely affects fatigue characteristics, chemical conversion treatability, and corrosion resistance. Si increases the ferrite transformation temperature and thereby adversely affects the formation of fine precipitates, which is intended by the present invention. Thus, the Si content is less than 0.5%, preferably 0.001% or more and less than 0.1%, more preferably 0.001% or more and less than 0.05%.

Mn: More than 0.5% and 1.4% or less

Mn is one of the most important elements in the present invention. Mn significantly influences precipitation of a carbide containing Ti, which is the most important in the present invention, through control of austenite-to-ferrite transformation temperatures.

In the case of a hot-rolled steel sheet containing Ti, a carbide containing Ti is mainly precipitated by austenite → ferrite transformation in cooling and coiling steps after finish rolling in a hot-rolled steel sheet manufacturing process. Among carbides precipitated in a hot-rolled steel sheet, fine carbide contributes to high strength of the hot-rolled steel sheet, but coarse carbide does not contribute to high strength and adversely affects the workability of the hot-rolled steel sheet.

A high austenite-ferrite transformation temperature results in precipitation of a carbide containing Ti in a high-temperature region and consequently coarsening of the carbide containing Ti. Thus, in order to decrease the size of the carbide containing Ti, it is preferable to decrease the austenite-ferrite transformation temperature.

Mn is an element that has an effect of decreasing the austenite-ferrite transformation temperature. A Mn content of 0.5% or less results in an insufficient decrease in the austenite-ferrite transformation temperature. As a result, a carbide containing Ti is coarsened, and it is impossible to provide a high-strength hot-rolled steel sheet having high mass production burring formability for the purpose of the present invention. A Mn content of more than 1.4% results in increased Mn segregation in the central portion in the thickness direction. This center segregation impairs a punched surface before burring forming and is therefore responsible for low mass production burring formability. Thus, the Mn content is more than 0.5% and 1.4% or less, preferably more than 0.7% and 1.4% or less, more preferably more than 1.0% and 1.4% or less.

P: 0.05% or less

P is responsible for low workability of a hot-rolled steel sheet due to segregation. Thus, the P content is 0.05% or less, preferably 0.001% or more and 0.03% or less. In the case of a galvanized steel sheet formed by galvanizing treatment of a hot-rolled steel sheet, the P content is preferably 0.005% or more, more preferably 0.01% or more, in terms of platability.

S: 0.005% or less

S forms a sulfide and decreases the workability of a hot-rolled steel sheet. Thus, the S content is 0.005% or less, preferably 0.0001% or more and 0.003% or less, more preferably 0.0001% or more and 0.0015% or less.

N: 0.01% or less

An excessively high N content of more than 0.01% results in the formation of a large amount of nitride in a hot-rolled steel sheet manufacturing process, low hot ductility, and very low burring formability of a hot-rolled steel sheet due to coarsening of nitride. Thus, the N content is 0.01% or less, preferably 0.0001% or more and 0.006% or less, more preferably 0.0001% or more and 0.004% or less.

Al: 0.1% or less

A1 is an important element as a deoxidizing agent for steel. However, an Al content of more than 0.1% makes casting of steel difficult and results in a large amount of residual inclusion in steel and low surface quality and workability of a hot-rolled steel sheet. Thus, the Al content is 0.1% or less, preferably 0.001% or more and 0.06% or less.

Ti: 0.05% or more and 0.25% or less

Ti is one of the most important elements in the present invention. Ti forms fine carbide and contributes to increased strength of a hot-rolled steel sheet. In order to achieve the desired strength of a hot-rolled steel sheet (tensile strength of 900 MPa or more), the Ti content is 0.05% or more. However, a Ti content of more than 0.25% tends to result in the remaining coarse carbide in a hot-rolled steel sheet. Coarse carbide has no strength increasing effect and greatly impairs the workability, toughness, and weldability of a hot-rolled steel sheet. Thus, the Ti content is 0.05% or more and 0.25% or less, preferably 0.08% or more and 0.20% or less.

V: More than 0.15% and 0.4% or less

V is also one of the most important elements in the present invention. V forms fine carbide and contributes to increased strength of a hot-rolled steel sheet. In order to achieve the desired strength of a hot-rolled steel sheet (tensile strength of 900 MPa or more), the V content is more than 0.15%. However, a V content of more than 0.4% is not worth the cost. Thus, the V content is more than 0.15% and 0.4% or less, preferably more than 0.15% and 0.35% or less.

A hot-rolled steel sheet according to the present invention contains S, N, Ti, and V in the ranges described above so as to satisfy the formula (1). The formula (1) is a requirement to be satisfied in order to achieve high strength and good mass production burring formability of a hot-rolled steel sheet and is a very important indicator in the present invention. In the formula (1), $Ti^* = Ti - N \times (48/14) - S \times (48/32)$, and S, N, Ti, and V denote the amounts (%) of the corresponding elements.

$$Ti^* + V \geq 0.35 \quad (1)$$

As described below, in the present invention, predetermined amounts of Ti and V, which are carbide formation elements, are added to steel, and carbide in steel is dissolved by heating before hot rolling. These elements are mainly precipitated as carbides during coiling after hot rolling. However, Ti and V added to steel do not entirely contribute to the formation of carbide. In particular, part of Ti added to steel is likely to be consumed by forming nitride or sulfide. This is because Ti is likely to form nitride or sulfide rather than carbide in a higher temperature region than the coiling temperature. Thus, Ti forms nitride or sulfide before the coiling step in the production of a hot-rolled steel sheet. Thus, the minimum amount of Ti that can contribute to the formation of carbide out of Ti added to steel can be represented by Ti* (= Ti - N x (48/14) - S x (48/32)).

A hot-rolled steel sheet cannot have the desired strength (tensile strength of 900 MPa or more) at Ti* + V of less than 0.35. Ti* + V of less than 0.35 tends to result in precipitation of coarse nitride or sulfide in a hot-rolled steel sheet, which results in low mass production burring formability. Thus, in the present invention, Ti* + V is 0.35 or more, preferably 0.355 or more. However, Ti* + V of more than 0.46 may result in excessively high strength of a hot-rolled steel sheet and low workability. Thus, Ti* + V is preferably 0.46 or less.

These are base components of a hot-rolled steel sheet according to the present invention. A hot-rolled steel sheet according to the present invention may contain Nb: 0.002% or more and 0.1% or less, if necessary.

Nb is effective in decreasing the size of crystal grains and improving the toughness of a hot-rolled steel sheet. Thus, Nb may be added as required. In order to produce such an effect, the Nb content is preferably 0.002% or more. However, a Nb content of more than 0.1% is not worth the cost. Thus, the Nb content is preferably 0.002% or more and 0.1% or less, more preferably 0.002% or more and 0.08% or less.

A hot-rolled steel sheet according to the present invention may contain at least one of Cu: 0.005% or more and 0.2% or less, Ni: 0.005% or more and 0.2% or less, Cr: 0.002% or more and 0.2% or less, Mo: 0.002% or more and 0.2% or less, and Sn: 0.005% or more and 0.2% or less, if necessary.

Cu, Ni, and Sn are elements that contribute to high strength of a hot-rolled steel sheet and may be added, if necessary. In order to produce such an effect, the Cu content is preferably 0.005% or more, the Ni content is preferably 0.005% or more, and the Sn content is preferably 0.005% or more. However, a Cu, Ni, or Sn content of more than 0.2% may result in surface layer cracking during hot rolling in the production of a hot-rolled steel sheet. Thus, the Cu content is preferably 0.005% or more and 0.2% or less, more preferably 0.005% or more and 0.1% or less. The Ni content is preferably 0.005% or more and 0.2% or less, more preferably 0.005% or more and 0.15% or less. The Sn content is preferably 0.005% or more and 0.2% or less, more preferably 0.005% or more and 0.1% or less.

Cr and Mo are carbide formation elements, contribute to high strength of a hot-rolled steel sheet, and may be added, if necessary. In order to produce such an effect, the Cr content is preferably 0.002% or more, and the Mo content is preferably 0.002% or more. However, a Cr or Mo content of more than 0.2% is not worth the cost. Thus, the Cr content is preferably 0.002% or more and 0.2% or less, more preferably 0.002% or more and 0.1% or less. The Mo content is preferably 0.002% or more and 0.2% or less, more preferably 0.002% or more and 0.1% or less.

A hot-rolled steel sheet according to the present invention may contain B: 0.0002% or more and 0.003% or less, if necessary.

B is an element that retards austenite-ferrite transformation of steel. B decreases the precipitation temperature of a carbide containing Ti by suppressing austenite-ferrite transformation and contributes to a reduction in the size of the carbide. In order to produce such an effect, the B content is preferably 0.0002% or more. However, a B content of more than 0.003% results in a strong bainite transformation effect of B, making it difficult for a hot-rolled steel sheet to have a structure consisting essentially of a ferrite phase intended by the present invention. Thus, the B content preferably 0.0002% or more and 0.003% or less, more preferably 0.0002% or more and 0.002% or less.

A hot-rolled steel sheet according to the present invention may contain at least one of Ca: 0.0002% or more and 0.005% or less and REM: 0.0002% or more and 0.03% or less, if necessary.

Ca and REM are elements that are effective in morphology control of an inclusion in steel and contribute to improved workability of a hot-rolled steel sheet. In order to produce such an effect, the Ca content is preferably 0.0002% or more, and the REM content is preferably 0.0002% or more. However, a Ca content of more than 0.005% or a REM content of more than 0.03% may result in an increased inclusion in steel and low workability of a hot-rolled steel sheet. Thus, the Ca content is preferably 0.0002% or more and 0.005% or less, more preferably 0.0002% or more and 0.003% or less. The REM content is preferably 0.0002% or more and 0.03% or less, more preferably 0.0002% or more and 0.003% or less.

In the present invention, the remainder is Fe and incidental impurities. Examples of the incidental impurities include W, Co, Ta, Sb, Zr, and O. The amount of each of the incidental impurities may be 0.1% or less.

Next, the reasons for limiting the microstructure of a hot-rolled steel sheet according to the present invention will be described below.

A hot-rolled steel sheet according to the present invention has a microstructure in which the ferrite phase fraction is more than 90%, a carbide containing Ti is precipitated, and 70% or more of the carbide has a grain size of less than 9 nm. Preferably, 50% by mass or more of Ti in a hot-rolled steel sheet is precipitated as precipitates having a grain size of less than 20 nm.

Ferrite Phase Fraction: More than 90%

The burring formability of a hot-rolled steel sheet can be effectively improved when the hot-rolled steel sheet has a microstructure including a ductile ferrite phase. In order to achieve high mass production burring formability intended by the present invention, the ferrite fraction in the microstructure of a hot-rolled steel sheet is more than 90%, preferably more than 92%, more preferably more than 94% by area. It is desirable that the ferrite grains have a polygonal shape from the perspective of burring formability. It is also desirable that the ferrite grain size be as small as possible. The hot-rolled steel sheet preferably has a single phase structure of ferrite in terms of burring formability. In order to improve punchability, the ferrite fraction is preferably 98% by area or less, more preferably 97% by area or less.

A hot-rolled steel sheet according to the present invention may have a microstructure other than the ferrite phase, such as cementite, pearlite, bainite, martensite, and/or retained austenite. Although excessive amounts of these microstructures in the steel sheet impair burring formability, these microstructures may constitute approximately less than 10% by area in total. Appropriate amounts of these microstructures in the hot-rolled steel sheet contribute to improved punchability before burring forming and consequently contribute to improved burring formability. Thus, the microstructures other than the ferrite phase preferably constitute 2% or more and less than 8% by area, more preferably 3% or more and less than 6% by area.

Carbide Containing Ti

In the present invention, the desired strength (tensile strength of 900 MPa or more) of a hot-rolled steel sheet is achieved by precipitation of a carbide containing Ti in the hot-rolled steel sheet. The carbide containing Ti is mainly precipitated carbide resulting from austenite $\rightarrow$ ferrite transformation in the cooling and coiling steps after finish rolling in a hot-rolled steel sheet manufacturing process.

In order to make the maximum use of the precipitation strengthening effect and optimize the balance between strength and workability (mass production burring formability), it is necessary to reduce the size of a carbide containing Ti precipitated in a hot-rolled steel sheet. As a result of extensive studies, the present inventors found that 70% by number or more, preferably 80% or more, of a carbide containing Ti has a grain size of less than 9 nm in order to achieve the desired characteristics. The "carbide containing Ti" includes complex carbides containing Ti and at least one of V, Nb, Cr, and Mo as well as Ti carbide.

Precipitates Containing Ti

The size of precipitates containing Ti can be controlled to further improve the mass production burring formability of a hot-rolled steel sheet.

As described above, in the case of a hot-rolled steel sheet made of steel containing Ti, in addition to carbide (carbide containing Ti) that contributes to high strength of a hot-rolled steel sheet, nitride, carbonitride, and sulfide containing Ti are precipitated. In the production of a hot-rolled steel sheet, these nitride, carbonitride, and sulfide are precipitated faster than carbide containing Ti. Thus, nitride, carbonitride, and sulfide containing Ti are precipitated in a higher temperature range than carbide and are therefore easily coarsened and tend to impair mass production burring formability.

As a result of extensive studies, the present inventors found that the control of the amount and size of these precipitates is very effective in improving mass production burring formability principally aimed by the present invention. In order to produce such an effect, 50% by mass or more, more preferably 60% by mass or more and 85% by mass or less, still more preferably 65% by mass or more and 80% by mass or less, of Ti in a hot-rolled steel sheet is preferably precipitated as precipitates containing Ti having a grain size of less than 20 nm. The precipitates containing Ti having a grain size of less than 20 nm are mostly carbide containing Ti and also include nitride, carbonitride, and sulfide containing Ti.

The precipitates containing Ti may be precipitates of Ti carbide, Ti nitride, Ti sulfide, and/or Ti carbonitride, and/or complex precipitates, such as complex carbide, complex nitride, complex sulfide, and/or complex carbonitride containing Ti and at least one of V, Nb, Cr, and Mo.

Even when precipitates having a grain size of 20 nm or more out of precipitates containing Ti are precipitated, it is surmised that a proper amount of precipitates contribute to improved punchability before burring forming and consequently contribute to improved burring formability.

Formation of a coated layer on a surface of a hot-rolled steel sheet according to the present invention in order to impart corrosion resistance does not reduce the advantages of the present invention. The type of coated layer formed on a surface of a hot-rolled steel sheet is not particularly limited and may be galvanic electroplating or hot-dip plating. The hot-dip plating may be hot-dip galvanization. The coated layer may also be galvannealed steel, which was subjected to alloying treatment after plating.

A method for manufacturing a hot-rolled steel sheet according to the present invention will be described below.

The present invention according to claim 3 characteristically includes heating steel having the composition described above to 1100°C or more and 1350°C or less, hot-rolling the steel at a finish-rolling temperature of ($Ar_3$ + 25°C) or more and ($Ar_3$+ 140°C) or less and at a total reduction ratio of 60% or less at last two finish rolling stands, cooling the hot-rolled steel sheet at an average cooling rate of 50°C/s or more and 150°C/s or less, and coiling the hot-rolled steel sheet at a coiling temperature in the range of 520°C to 680°C.

In the present invention, steel may be melted by any method, for example, in a converter, electric furnace, or induction furnace. After that, secondary smelting is preferably performed with vacuum degassing equipment. Subsequent casting is preferably performed in a continuous casting process in terms of productivity and quality. A blooming method can also be used. A slab (steel) to be casted may be a general slab having a thickness in the range of approximately 200 to 300 mm or a thin slab having a thickness of approximately 30 mm. In the case of a thin slab, rough rolling may be omitted. A slab after casting may be subjected to hot direct rolling or may be subjected to hot rolling after reheating in a furnace.

Steel Heating Temperature: 1100°C or more and 1350°C or less

Steel thus produced is subjected to hot rolling. In the present invention, it is important to heat the steel (slab) before hot rolling and redissolve carbide in the steel. At a steel heating temperature of less than 1100°C, carbide is not redissolved in the steel, and desired fine carbide cannot be formed in the cooling and coiling steps after hot rolling. Thus, the steel heating temperature is 1100°C or more, preferably 1200°C or more, more preferably 1240°C or more.

However, an excessively high steel heating temperature results in excessively accelerated oxidation of the surface of a steel sheet and very poor surface quality and adversely affects the workability of a hot-rolled steel sheet. Thus, the steel heating temperature is 1350°C or less.

After heating of steel, the steel is subjected to hot rolling, which is composed of rough rolling and finish rolling. The rough rolling conditions are not particularly limited. As described above, when steel is a thin slab, rough rolling may be omitted. In the finish rolling, the finish-rolling temperature is ($Ar_3$ + 25°C) or more, and the total reduction ratio at last two stands of a finish rolling mill is 60% or less.

Finish-Rolling Temperature: ($Ar_3$ + 25°C) or more and $Ar_3$ + 140°C

At a finish-rolling temperature of less than ($Ar_3$ + 25°C), austenite → ferrite transformation in the cooling and coiling steps after hot rolling is ferrite transformation from unrecrystallized austenite grains. In such a case, desired fine carbide cannot be formed, and a hot-rolled steel sheet cannot have the strength intended by the present invention (tensile strength of 900 MPa or more). Thus, the finish-rolling temperature is ($Ar_3$ + 25°C) or more, preferably ($Ar_3$ + 40°C) or more. However, an excessively high finish-rolling temperature results in coarsening of crystal grains and adversely affects the punchability of a hot-rolled steel sheet. Thus, the finish-rolling temperature is ($Ar_3$ + 140°C) or less.

The $Ar_3$ transformation point herein refers to a transformation temperature at a change point of a thermal expansion curve measured in a thermecmastor test (thermomechanical simulation test) at a cooling rate of 5°C/s.

Total Reduction Ratio at Last Two Finish Rolling Stands: 60% or less

When the total reduction ratio at last two finish rolling stands exceeds 60%, this results in increased residual strain and accelerates ferrite transformation from unrecrystallized austenite grains. Thus, the total reduction ratio at last two stands of a finish rolling mill is 60% or less, preferably 50% or less.

Average Cooling Rate: 50°C/s or more and 150°C/s or less

When the average cooling rate in cooling after hot rolling is less than 40°C/s, this results in a high ferrite transformation temperature. As a result, carbide is precipitated in a high temperature region, desired fine carbide cannot be formed, and a hot-rolled steel sheet cannot have the strength intended by the present invention (tensile strength of 900 MPa or more). Thus, the average cooling rate is 50°C/s or more. However, at an excessively high average cooling rate, it may be impossible to achieve the desired ferrite microstructure. Thus, the average cooling rate is 150°C/s or less.

The average cooling rate herein refers to the average cooling rate between the finish-rolling temperature and the coiling temperature.

In the present invention, a carbide containing Ti is precipitated in a period from immediately before coiling to the beginning of the coiling step by decreasing the ferrite transformation temperature so as to be close to the coiling temperature at the average cooling rate. This can prevent precipitation and coarsening of the carbide containing Ti in a high temperature region. Thus, the resulting hot-rolled steel sheet can contain precipitated fine carbide intended by the present invention.

Coiling Temperature: 520°C to 680°C

As described above, in the present invention, fine carbide containing Ti is mainly precipitated in a period from immediately before coiling to the beginning of the coiling step. Thus, in order to precipitate a large amount of fine carbide containing Ti, the coiling temperature is controlled in a temperature range suitable for precipitation of the carbide containing Ti. At a coiling temperature of less than 520°C or more than 680°C, fine carbide that contributes to high strength of steel is not sufficiently precipitated, and the hot-rolled steel sheet cannot have the desired strength. For these reasons, the coiling temperature ranges from 520°C to 680°C, preferably 550°C to 650°C.

In the present invention according to claim 4, a hot-rolled steel sheet after coiling can be subjected to pickling and annealing treatment and then to plating treatment by immersion in a molten zinc bath. After the plating treatment, the hot-rolled steel sheet may be subjected to alloying treatment. When the plating treatment is performed, the coiling temperature ranges from 500°C to 640°C, and the soaking temperature for the annealing treatment is 760°C or less.

Coiling Temperature: 500°C to 640°C

A higher coiling temperature facilitates the formation of an internal oxidation layer in a hot-rolled steel sheet. The internal oxidation layer is responsible for plating defects. In particular, a coiling temperature of more than 640°C results in low plating quality. On the other hand, a low coiling temperature is preferred in order to prevent plating defects. However, a coiling temperature of less than 500°C results in insufficient precipitation of a carbide containing Ti, and a hot-rolled steel sheet cannot have the desired strength. Thus, when plating treatment is performed after coiling, the coiling temperature ranges from 500°C to 640°C, preferably 520°C to 600°C.

Soaking Temperature: 760°C or less

As described above, when the coiling temperature is lowered for plating treatment, fine carbide that contributes to high strength of a hot-rolled steel sheet (carbide containing Ti) may be insufficiently precipitated during coiling. Thus, in the present invention, the desired strength (tensile strength of 900 MPa or more) of a hot-rolled steel sheet after plating treatment is achieved by precipitating fine carbide (carbide containing Ti) during annealing treatment before the plating treatment. When the soaking temperature for annealing treatment exceeds 760°C, precipitated carbide (carbide containing Ti) is coarsened, and a hot-rolled steel sheet has low strength. Thus, the soaking temperature for the annealing treatment is 760°C or less, preferably 740°C or less. In order to promote precipitation of fine carbide (carbide containing Ti), the soaking temperature for annealing treatment is preferably 600°C or more. The holding time at the soaking temperature preferably ranges from 10 to 1000 seconds.

After the annealing treatment, the steel sheet is immersed in a hot-dip galvanizing bath to form a hot-dip galvanized layer on the surface of the steel sheet. After immersion in the hot-dip galvanizing bath, the steel sheet may be subjected to alloying treatment. The annealing treatment and plating treatment are preferably performed in a continuous hot-dip galvanizing line.

The type of plating is not limited to hot-dip galvanization or galvannealing described above and may be electrogalvanizing.

The plating treatment conditions, the alloying treatment conditions, and other manufacturing conditions are not particularly limited and may be general conditions.

EXAMPLES

Steel slabs (Nos. A to P) containing the components listed in Table 1 and having the Ar$_3$ transformation point listed in Table 1 were heated to a temperature in the range of 1200°C to 1290°C, and hot-rolled steel sheets (Nos. 1 to 22) were formed under the hot-rolling conditions listed in Table 2. The hot-rolled steel sheets had a thickness in the range of 1.2 to 3.2 mm. The Ar$_3$ transformation points listed in Table 1 were determined as described above. Part of the hot-rolled steel sheets (Nos. 3, 4, 9, 10, 14, 16, and 18 to 20) were subjected to pickling and were then subjected to annealing treatment at a soaking temperature listed in Table 2 and hot-dip galvanizing treatment in a hot-dip galvanization line. In the hot-dip galvanizing treatment, each of the hot-rolled steel sheets subjected to the annealing treatment was immersed in a galvanizing bath (0.1% by mass Al-Zn) at 480°C, and a hot-dip galvanized layer was formed on both faces of the steel sheet at 45 g/m$^2$. Part of the hot-rolled steel sheets (Nos. 9, 10, 14, 16, and 18 to 20) were subjected to the hot-dip galvanizing treatment and then alloying treatment. The alloying treatment temperature was 520°C.

Test specimens were taken from the hot-rolled steel sheets (Nos. 1 to 22) and were subjected to microstructure observation, a tensile test, and a hole-expanding test. The microstructure observation method and various test methods were as follows:

(i) Microstructure Observation

Ferrite Phase Fraction

Scanning electron microscope (SEM) test specimens were taken from the hot-rolled steel sheets. A vertical cross section of each of the test specimens parallel to the rolling direction was polished and was subjected to nital etching. SEM photographs were taken in 10 visual fields at a quarter thickness in the depth direction and at a magnification ratio of 3000. A ferrite phase and a non-ferrite phase were separated by image analysis. The fraction of each of the phases (area fraction) was determined.

Carbide Containing Ti

Thin film samples were prepared from the hot-rolled steel sheets (at a quarter thickness in the depth direction). Photographs were taken in 10 visual fields with a transmission electron microscope at a magnification ratio of 200,000.
The number of carbide grains containing Ti ($N_0$) was determined from the photographs. The grain size of each carbide grain containing Ti was determined as an equivalent circle diameter by image processing. The number of carbide grains having a grain size of less than 9 nm ($N_1$) out of the carbide grains containing Ti was determined. The ratio of the number of carbide grains having a grain size of less than 9 nm to the number of carbide grains containing Ti ($N_1/N_0$ x 100(%)) was calculated from these numbers ($N_0$ and $N_1$).

Precipitates Containing Ti

Precipitates were extracted from the hot-rolled steel sheets by constant-current electrolysis using an AA electrolyte solution (an ethanol solution of acetylacetone-tetramethylammonium chloride). The extract was passed through a filter having a pore size 20 nm. Precipitates having a size of less than 20 nm were separated in this manner, and the amount of Ti in the precipitates having a size of less than 20 nm was measured by inductively-coupled plasma optical emission spectrometry (ICP). The ratio (percentage) of Ti in the precipitates having a size of less than 20 nm was determined by dividing the amount of Ti in the precipitates having a size of less than 20 nm by the amount of Ti in the hot-rolled steel sheet.

(ii) Tensile Test

Three JIS No. 5 test pieces for tensile test were taken from each of the hot-rolled steel sheets such that the tensile direction is a direction perpendicular to the rolling direction. The tensile strength and total elongation were measured in a tensile test (strain rate: 10 mm/min) according to JIS Z 2241 (2011). Each of the hot-rolled steel sheets was subjected to measurements three times in the tensile test. The tensile strength (TS) and total elongation (El) were averages of the three measurements.

(iii) Hole-Expanding Test (Evaluation of Mass Production Burring Formability)

Test specimens (size: 150 mm x 150 mm) were taken from the hot-rolled steel sheets. A hole having an initial diameter $d_0$ was formed in each of the test specimens by punching with a 50-mm$\phi$ punch (clearance of stamping: 30%). The hole was then expanded by inserting a conical punch having a vertex angle of 60 degrees into the hole from the punched side. A hole diameter $d_1$ at which a crack penetrated the steel sheet (test specimen) in the thickness direction was measured. The burring ratio (%) was calculated using the following equation.

$$\text{Burring ratio (\%)} = \{(d_1 - d_0)/d_0\} \times 100$$

A burring ratio of 30% or more was considered to be high mass production burring formability.
Table 3 shows the results.

[Table 1]

| Steel | Chemical composition (mass%) | | | | | | | | | | Ti*+V | Ar$_3$ (°C) | Remarks |
|---|---|---|---|---|---|---|---|---|---|---|---|---|---|
| | C | Si | Mn | P | S | Al | N | Ti | V | Others | | | |
| A | 0.061 | 0.11 | 1.28 | 0.045 | 0.0040 | 0.048 | 0.0018 | 0.210 | 0.162 | - | 0.360 | 858 | Inventive steel |
| B | 0.069 | 0.46 | 1.11 | 0.023 | 0.0004 | 0.019 | 0.0035 | 0.188 | 0.193 | Nb: 0.008. Sn:0.02 | 0.368 | 860 | Inventive steel |
| C | 0.075 | 0.03 | 0.85 | 0.021 | 0.0016 | 0.038 | 0.0033 | 0.159 | 0.221 | B:0.0008 | 0.366 | 845 | Inventive steel |
| D | 0.081 | 0.19 | 1:40 | 0.009 | 0.0005 | 0.033 | 0.0019 | 0.134 | 0.238 | - | 0.360 | 845 | Inventive steel |
| E | 0.085 | 0.01 | 1.01 | 0.014 | 0.0009 | 0.044 | 0.0027 | 0.131 | 0.251 | - | 0.371 | 825 | Inventive steel |
| F | 0.093 | 0.03 | 0.93 | 0.013 | 0.0014 | 0.024 | 0.0062 | 0.124 | 0.254 | Ni:0.18 | 0.355 | 831 | Inventive steel |
| G | 0.099 | 0.03 | 0.72 | 0.005 | 0.0004 | 0.066 | 0.0011 | 0.095 | 0.366 | Cr:0.04 | 0.457 | 829 | Inventive steel |
| H | 0.107 | 0.27 | 1.03 | 0.011 | 0.0009 | 0.042 | 0.0042 | 0.088 | 0.333 | Mo:0.09 | 0.405 | 832 | Inventive steel |
| I | 0.116 | 0.01 | 0.59 | 0.017 | 0.0011 | 0.046 | 0.0037 | 0.074 | 0.355 | Nb:0.010, Ca:0.0013 | 0.415 | 836 | Inventive steel |
| J | 0.128 | 0.09 | 1.38 | 0.030 | 0.0014 | 0.039 | 0.0039 | 0.056 | 0.321 | Cu:0.04, Ni:0.08 | 0.360 | 821 | Inventive steel |
| K | 0.074 | 0.08 | 0.49 | 0.013 | 0.0011 | 0.049 | 0.0048 | 0.177 | 0.225 | - | 0.384 | 853 | Comparative steel |
| L | 0.104 | 0.03 | L46 | 0.011 | 0.0010 | 0.038 | 0.0031 | 0.121 | 0.289 | - | 0.398 | 810 | Comparative steel |
| M | 0.085 | 0.01 | 1.01 | 0.013 | 0.0009 | 0.047 | 0.0039 | 0.125 | 0.227 | - | 0.337 | 830 | Comparative steel |
| N | 0.089 | 0.02 | 1.39 | 0.010 | 0.0007 | 0.041 | 0.0035 | 0.119 | 0.229 | - | 0.335 | 816 | Comparative steel |
| O | 0.086 | 0.22 | 1.40 | 0.025 | 0.0043 | 0.033 | 0.0065 | 0.144 | 0.251 | - | 0.366 | 860 | Inventive steel |
| P | 0.078 | 0.18 | 1.37 | 0.024 | 0.0035 | 0.033 | 0.0075 | 0.155 | 0.241 | REM:0.001 | 0.365 | 850 | Inventive steel |
| Ti* = Ti-N × (48/14)-S × (48/32)(S, N, and Ti in Formulae (1) and (2) denote the amounts (mass%) of the corresponding elements) | | | | | | | | | | | | | |

EP 2 952 600 B1

[Table 2]

| Hot-rolled steel sheet No. | Steel | Plating treatment *2 | Sheet thickness (mm) | Manufacturing conditions for hot-rolled steel sheet | | | | | | | Remarks |
|---|---|---|---|---|---|---|---|---|---|---|---|
| | | | | Heating temperature (°C) | Finish-rolling temperature (°C) | Total reduction ratio at last two finish rolling passes (%) | Average cooling rate (°C/s) | Coiling temperature (°C) | Soaking temperature for annealing treatment (°C) | | |
| 1 | A | - | 3.2 | 1200 | 900 | 55 | 65 | 680 | - | | Example |
| 2 | B | - | 2.3 | 1230 | 950 | 45 | 80 | 650 | - | | Example |
| 3 | B | GI | 1.4 | 1220 | 915 | 50 | 90 | 580 | 655 | | Example |
| 4 | B | GI | 1.4 | 1220 | 920 | 45 | 80 | 595 | 770 | | Comparative example |
| 5 | C | - | 2.6 | 1280 | 880 | 40 | 50 | 590 | - | | Example |
| 6 | D | - | 2.0 | 1250 | 930 | 50 | 100 | 615 | - | | Example |
| 7 | D | - | 2.0 | 1250 | 825 | 60 | 125 | 635 | - | | Comparative example |
| 8 | D | - | 2.0 | 1250 | 910 | 25 | 95 | 650 | - | | Comparative example |
| 9 | E | GA | 2.3 | 1240 | 905 | 60 | 90 | 610 | 690 | | Example |
| 10 | E | GA | 2.3 | 1240 | 900 | 50 | 85 | 450 | 660 | | Comparative example |
| 11 | E | - | 2.6 | 1240 | 930 | 50 | 35 | 670 | - | | Comparative example |
| 12 | F | - | 1.8 | 1280 | 925 | 40 | 110 | 635 | | | Example |
| 13 | G | - | 1.6 | 1290 | 920 | 35 | 140 | 630 | - | | Example |
| 14 | H | GA | 2.9 | 1260 | 905 | 55 | 55 | 635 | 610 | | Example |
| 15 | I | - | 1.2 | 1240 | 865 | 45 | 90 | 575 | - | | Example |
| 16 | J | GA | 2.0 | 1220 | 910 | 50 | 75 | 520 | 740 | | Example |
| 17 | K | - | 2.0 | 1250 | 890 | 55 | 95 | 695 | - | | Comparative example |

(continued)

| Hot-rolled steel sheet No. | Steel | Plating treatment *2 | Sheet thickness (mm) | Manufacturing conditions for hot-rolled steel sheet | | | | | | | Remarks |
|---|---|---|---|---|---|---|---|---|---|---|---|
| | | | | Heating temperature (°C) | Finish-rolling temperature (°C) | Total reduction ratio at last two finish rolling passes (%) | Average cooling rate (°C/s) | Coiling temperature (°C) | Soaking temperature for annealing treatment (°C) | | |
| 18 | L | GA | 2.3 | 1250 | 900 | 40 | 90 | 515 | 615 | | Comparative example |
| 19 | M | GA | 2.9 | 1260 | 915 | 45 | 45 | 590 | 695 | | Comparative example |
| 20 | N | GA | 2.6 | 1250 | 910 | 50 | 75 | 505 | 710 | | Comparative example |
| 21 | O | - | 2.0 | 1250 | 930 | 50 | 100 | 615 | - | | Example |
| 22 | P | - | 2.0 | 1250 | 930 | 50 | 100 | 615 | - | | Example |
| *2) "-" represents no plating treatment "GI" represents hot-dip galvanizing treatment. "GA" represents hot-dip galvanizing treatment and alloying treatment. | | | | | | | | | | | |

Table 3

| Hot-rolled steel sheet No. | Microstructure of hot-rolled steel sheet | | | Mechanical properties of hot-rolled steel sheet | | | Remarks |
|---|---|---|---|---|---|---|---|
| | Ferrite phase fraction (area%) *3 | Number percentage of carbide having grain size of less than 9 nm out of carbide containing Ti (%) | Percentage of Ti precipitate having grain size of 20 nm (%) | Tensile strength TS (MPa) | Total elongation El (%) | Burring ratio (%) | |
| 1 | 91(P:9) | 70 | 50 | 915 | 25 | 56 | Example |
| 2 | 95(P:5) | 85 | 80 | 936 | 22 | 54 | Example |
| 3 | 98(B: 2) | 80 | 75 | 929 | 24 | 58 | Example |
| 4 | 92(P:4, B:4) | 55 | 40 | 884 | 17 | 24 | Comparative example |
| 5 | 95(P:1, B:4) | 75 | 50 | 951 | 21 | 51 | Example |
| 6 | 98(P:2) | 90 | 85 | 1007 | 20 | 59 | Example |
| 7 | 91(P:9) | 40 | 40 | 885 | 13 | 14 | Comparative example |
| 8 | 92(P:8) | 50 | 50 | 881 | 12 | 16 | Comparative example |
| 9 | 97(P:3) | 75 | 65 | 1019 | 19 | 61 | Example |
| 10 | 91(B:2, M:7) | 65 | 35 | 893 | 9 | 13 | Comparative example |
| 11 | 81(P:19) | 25 | 50 | 864 | 11 | 11 | Comparative example |
| 12 | 98(P:2) | 80 | 80 | 998 | 18 | 44 | Example |
| 13 | 99(P:1) | 85 | 85 | 1198 | 14 | 40 | Example |
| 14 | 91(P:9) | 70 | 55 | 1181 | 16 | 39 | Example |
| 15 | 95(P:1, B:4) | 75 | 55 | 1195 | 17 | 33 | Example |
| 16 | 94(B:6) | 75 | 50 | 997 | 19 | 53 | Example |
| 17 | 91(P:9) | 30 | 30 | 854 | 16 | 21 | Comparative example |
| 18 | 98(B:2) | 70 | 30 | 1099 | 14 | 23 | Comparative example |
| 19 | 93(P:7) | 65 | 40 | 932 | 16 | 26 | Comparative example |
| 20 | 97(B:2, M:1) ) | 70 | 40 | 945 | 17 | 28 | Comparative example |
| 21 | 98(P:2) | 80 | 45 | 942 | 20 | 32 | Example |
| 22 | 98(P:2) | 70 | 40 | 915 | 20 | 31 | Example |

*3) The percentages of microstructures other than ferrite phase are shown in parentheses. P: pearlite (including cementite). B: bainite, M: martensite (including retained austenite).

The hot-rolled steel sheets according to examples (Nos. 1 to 3, 5, 6, 9, 12 to 16, 21, and 22) had the desired tensile strength (900 MPa or more) and good mass production burring formability. By contrast, the hot-rolled steel sheets according to comparative examples (Nos. 4, 7, 8, 10, 11, and 17 to 20), which were outside the scope of the present invention, did not have the desired high strength or sufficient burring ratios.

**Claims**

1. A high-strength hot-rolled steel sheet consisting of, on a mass percent basis:

   C: 0.06% or more and 0.13% or less, Si: less than 0.5%,
   Mn: more than 0.5% and 1.4% or less, P: 0.05% or less,
   S: 0.005% or less, N: 0.01% or less,
   Al: 0.1% or less, Ti: 0.05% or more and 0.25% or less, and
   V: more than 0.15% and 0.4% or less
   such that S, N, Ti, and V satisfy the following formula (1), optionally Nb: 0.002% or more and 0.1% or less, at least one of Cu: 0.005% or more and 0.2% or less, Ni: 0.005% or more and 0.2% or less, Cr: 0.002% or more and 0.2% or less, Mo: 0.002% or more and 0.2% or less, Sn: 0.005% or more and 0.2% or less, B: 0.0002% or more and 0.003% or less, Ca: 0.0002% or more and 0.005% or less and REM: 0.0002% or more and 0.03% or less, the remainder being Fe and incidental impurities, wherein the high-strength hot-rolled steel sheet has a microstructure in which a ferrite phase fraction is more than 90% by area, and less than 10% by area in total of at least one of pearlite, cementite, bainite, martensite and retained austenite, a carbide containing Ti is precipitated, and 70% by number or more of the carbide has a grain size of less than 9 nm.

$$Ti^* + V \geq 0.35 \qquad (1)$$

   wherein Ti* = Ti - N x (48/14) - S x (48/32), and S, N, Ti, and V denote the amounts (% by mass) of the corresponding elements.

2. The high-strength hot-rolled steel sheet according to Claim 1, wherein 50% by mass or more of Ti is precipitated as carbide, nitride, carbonitrides and sulfide precipitates containing Ti having a grain size of less than 20 nm.

3. A method for manufacturing a high-strength hot-rolled steel sheet, comprising: heating steel having a composition according to Claim 1 to 1100°C or more and 1350°C or less, hot-rolling the steel at a finish-rolling temperature of ($Ar_3$ + 25°C) or more and ($Ar_3$ + 140°C) or less and at a total reduction ratio of 60% or less at last two finish rolling stands, cooling the hot-rolled steel sheet at an average cooling rate of 50°C/s or more and 150°C/s or less, and coiling the hot-rolled steel sheet at a coiling temperature in the range of 520°C to 680°C.

4. A method for manufacturing a high-strength hot-rolled steel sheet, comprising: heating steel having a composition according to Claim 1 to 1100°C or more and 1350°C or less, hot-rolling the steel at a finish-rolling temperature of ($Ar_3$ + 25°C) or more and ($Ar_3$ + 140°C) or less and at a total reduction ratio of 60% or less at last two finish rolling stands, cooling the hot-rolled steel sheet at an average cooling rate of 50°C/s or more and 150°C/s or less, coiling the hot-rolled steel sheet at a coiling temperature in the range of 500°C to 640°C, annealing the hot-rolled steel sheet at a soaking temperature of 760°C or less after pickling, and plating the hot-rolled steel sheet by immersing the hot-rolled steel sheet in a molten zinc bath.

5. The method for manufacturing a high-strength hot-rolled steel sheet according to Claim 4, wherein the plating treatment is followed by alloying treatment.

**Patentansprüche**

1. Hochfestes, warmgewalztes Stahlblech, bestehend aus, auf Massenprozentbasis:

   C: 0,06 % oder mehr und 0,13 % oder weniger, Si: weniger als 0,5 %, Mn: mehr als 0,5 % und 1,4 % oder weniger, P: 0,05 % oder weniger, S: 0,005 % oder weniger, N: 0,01 % oder weniger, Al: 0,1 % oder weniger, Ti: 0,05 % oder mehr und 0,25 % oder weniger, und V: mehr als 0,15 % und 0,4 % oder weniger, so dass L, N, Ti und V folgende Formel (1) erfüllen, optional Nb: 0,002 % oder mehr und 0,1 % oder weniger, mindestens einem aus Cu: 0,005 % oder mehr und 0,2 % oder weniger, Ni: 0,005 % oder mehr und 0,2 % oder weniger, Cr: 0,002 % oder mehr und 0,2 % oder weniger, Mo: 0,002 % oder mehr und 0,2 % oder weniger, Sn: 0,005 % oder mehr und 0,2 % oder weniger, B: 0,0002 % oder mehr und 0,003 % oder weniger, Ca: 0,0002 % oder mehr und 0,005 % oder weniger, und REM: 0,0002 % oder mehr und 0,03 % oder weniger, wobei der Rest Fe und zufällige Verunreinigungen sind, wobei das hochfeste, warmgewalzte Stahlblech eine Mikrostruktur aufweist, in der ein Ferritphasenanteil mehr als 90 % der Fläche und weniger als 10 % der Fläche insgesamt von mindestens einem aus Perlit, Zementit, Bainit, Martensit und zurückbehaltenem Austenit ausmacht, ein titanenthaltendes Carbid ausgefällt ist, und 70 % der Anzahl oder mehr des Carbids eine Korngröße von weniger als 9 nm aufweist.

$$Ti^* + V \geq 0,35 \ (1)$$

wobei $Ti^* = N \times (48/14) - S \times (48/32)$ und S, N, Ti und V die Mengen (Ma%) der entsprechenden Elemente kennzeichnen.

2. Hochfestes, warmgewalztes Stahlblech nach Anspruch 1, wobei 50 Ma% oder mehr an Ti als Carbid, Nitrid, Carbonitride und Sulfidniederschläge ausgefällt sind, die Ti mit einer Korngröße von weniger als 20 nm enthalten.

3. Herstellungsverfahren für ein hochfestes, warmgewalztes Stahlblech, umfassend: Erwärmen von Stahl mit einer Zusammensetzung nach Anspruch 1 auf 1100 °C oder mehr und 1350 °C oder weniger, Warmwalzen des Stahls bei einer Fertigwalztemperatur von ($Ar_3$ + 25°C) oder mehr und ($Ar_3$ + 140°C) oder weniger bei einem Gesamtreduktionsverhältnis von 60 % oder weniger an den letzten beiden Walzengerüsten, Abkühlen des warmgewalzten Stahlblechs bei einer durchschnittlichen Abkühlungsgeschwindigkeit von 50 °C/s oder mehr und 150 °C/s oder weniger, und Aufwickeln des warmgewalzten Stahlblechs bei einer Aufwicklungstemperatur im Bereich von 520 °C bis 680 °C.

4. Herstellungsverfahren für ein hochfestes, warmgewalztes Stahlblech, umfassend: Erwärmen von Stahl mit einer Zusammensetzung nach Anspruch 1 auf 1100 °C oder mehr und 1350 °C oder weniger, Warmwalzen des Stahls bei einer Fertigwalztemperatur von ($Ar_3$ + 25°C) oder mehr und ($Ar_3$ + 140°C) oder weniger bei einem Gesamtreduktionsverhältnis von 60 % oder weniger an den letzten beiden Walzengerüsten, Abkühlen des warmgewalzten Stahlblechs bei einer durchschnittlichen Abkühlungsgeschwindigkeit von 50 °C/s oder mehr und 150 °C/s oder weniger, und Aufwickeln des warmgewalzten Stahlblechs bei einer Aufwicklungstemperatur im Bereich von 500°C bis 640 °C, Glühen des warmgewalzten Stahlblechs bei einer Durchwärmungstemperatur von 760 °C oder weniger nach dem Beizen, und Verzinken des warmgewalzten Stahlblechs durch Eintauchen des warmgewalzten Stahlblechs in ein Verzinkungsbad.

5. Herstellungsverfahren für ein hochfestes, warmgewalztes Stahlblech nach Anspruch 4, wobei die Verzinkungsbehandlung von einer Legierungsbehandlung gefolgt ist.

## Revendications

1. Tôle d'acier de haute résistance laminée à chaud constituée, sur une base de pourcentage en masse, de :

C : 0,06 % ou plus et 0,13 % ou moins,
Si : moins de 0,5 %,
Mn : plus de 0,5 % et 1,4 % ou moins,
P : 0,05 % ou moins,
S : 0,005 % ou moins,
N : 0,01 % ou moins,
Al : 0,1 % ou moins,
Ti : 0,05 % ou plus et 0,25 % ou moins et
V : plus de 0,15 % et 0,4 % ou moins
de telle sorte que S, N, Ti et V satisfassent la formule (1) suivante, éventuellement Nb : 0,002 % ou plus et 0,1 % ou moins, au moins l'un de Cu : 0,005 % ou plus et 0,2 % ou moins, Ni : 0,005 % ou plus et 0,2 % ou moins, Cr : 0,002 % ou plus et 0,2 % ou moins, Mo : 0,002 % ou plus et 0,2 % ou moins, Sn : 0,005 % ou plus et 0,2 % ou moins, B : 0,0002 % ou plus et 0,003 % ou moins, Ca : 0,0002 % ou plus et 0,005 % ou moins et terres rares : 0,0002 % ou plus et 0,03 % ou moins, le reste étant du Fe et des impuretés inévitables, la tôle d'acier de haute résistance laminée à chaud ayant une microstructure dans laquelle une fraction de phase ferrite est supérieure à 90 % en surface, et moins de 10 % en surface au total de l'une au moins de perlite, cémentite, bainite, martensite et austénite résiduelle, un carbure contenant du Ti a précipité et 70 % en nombre ou plus du carbure a une grosseur de grain inférieure à 9 nm.

$$Ti^* + V \geq 0,35 \quad (1)$$

où $Ti^* = Ti - N \times (48/14) - S \times (48/32)$, et S, N, Ti et V représentent les quantités (en % en masse) des éléments correspondants.

2. Tôle d'acier de haute résistance laminée à chaud selon la revendication 1, dans laquelle 50 % en masse ou plus du Ti est précipité sous forme de précipités carbure, nitrure, carbonitrures et sulfure contenant du Ti ayant une grosseur de grain inférieure à 20 nm.

3. Procédé de fabrication d'une tôle d'acier de haute résistance laminée à chaud, comprenant : le chauffage d'un acier ayant une composition selon la revendication 1 à 1 100 °C ou plus et 1 350 °C ou moins, le laminage à chaud de l'acier à une température de laminage de finissage de ($Ar_3$ + 25 °C) ou plus et ($Ar_3$ + 140 °C) ou moins et à un rapport de réduction total de 60 % ou moins au niveau des deux derniers postes de laminage de finissage, le refroidissement de la tôle d'acier laminée à chaud à une vitesse de refroidissement moyenne de 50 °C/s ou plus et 150 °C/s ou moins, et l'enroulement de la tôle d'acier laminée à chaud à une température d'enroulement dans la plage de 520 °C à 680 °C.

4. Procédé de fabrication d'une tôle d'acier de haute résistance laminée à chaud, comprenant : le chauffage d'un acier ayant une composition selon la revendication 1 à 1 100 °C ou plus et 1 350 °C ou moins, le laminage à chaud de l'acier à une température de laminage de finissage de ($Ar_3$ + 25 °C) ou plus et ($Ar_3$ + 140 °C) ou moins et à un rapport de réduction total de 60 % ou moins au niveau des deux derniers postes de laminage de finissage, le refroidissement de la tôle d'acier laminée à chaud à une vitesse de refroidissement moyenne de 50 °C/s ou plus et 150 °C/s ou moins, l'enroulement de la tôle d'acier laminée à chaud à une température d'enroulement dans la plage de 500 °C à 640 °C, le recuit de la tôle d'acier laminée à chaud à une température de maintien en température de 760 °C après décapage, et le placage de la tôle d'acier laminée à chaud par immersion de la tôle d'acier laminée à chaud dans un bain de zinc fondu.

5. Procédé de fabrication d'une tôle d'acier de haute résistance laminée à chaud selon la revendication 4, dans lequel le traitement de placage est suivi d'un traitement d'alliation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011122031 A1
- EP 2759613 A1
- JP 2005120437 A
- JP 2009084637 A
- JP 2011225978 A